# EUROPEAN PATENT SPECIFICATION

(11) **EP 4 076 266 B1**
(45) Date of publication and mention of the grant of the patent: **20.08.2025**
(21) Application number: 20820208.5
(22) Date of filing: 10.12.2020
(51) Int. Cl.: A61C 8/00

(54) **DENTAL IMPLANT AND DENTAL RESTORATION SYSTEM COMPRISING SUCH A DENTAL IMPLANT**
ZAHNIMPLANTAT UND ZAHNERSATZSYSTEM MIT EINEM SOLCHEN ZAHNIMPLANTAT
IMPLANT DENTAIRE ET SYSTÈME DE RESTAURATION DENTAIRE COMPRENANT UN TEL IMPLANT DENTAIRE

(30) Priority: 17.12.2019 EP 19217241
(43) Date of publication of application: 26.10.2022
(73) Proprietor: DeguDent GmbH, 63457 Hanau (DE); Dentsply Sirona Inc., York, PA 17401 (US)
(72) Inventor: VÖLKL, Dr. Lothar, 63773 Goldbach (DE); FECHER, Stefan, 63867 Johannesberg (DE)
(74) Representative: Allen, Caroline Margaret
(86) International application number: PCT/EP2020/085527
(87) International publication number: WO 2021/122308

(56) References cited:
- WO-A1-2012/126450
- WO-A1-2018/234928
- FR-A1- 2 788 963
- US-A1- 2008 274 440
- US-A1- 2010 003 639
- US-A1- 2014 030 675
- US-A1- 2017 020 639

## Description

### Field of the Invention

The present invention relates to a dental implant comprising at least a lower part and at least an upper part; wherein said lower part of the dental implant, which is adapted to be connected to the jawbone of a patient, is made of an at least first material; wherein said upper part of the dental implant, which is adapted to be connected to the lower part of the dental implant, is made of an at least second material; and wherein the upper surface of the upper part of the dental implant is adapted to be aligned with the upper surface of the jawbone of a patient.

The present invention is also directed to a dental restoration system comprising at least such a dental implant.

### Background of the Invention

Dental implants generally consist of an implant which is anchored within bone, and an abutment that is connected to the implant to support a prosthesis, such as a prosthetic tooth or denture. The abutment partially extends into the oral cavity in the position of the tooth it is to replace. The majority of dental implants are made of metal, usually titanium. Metal implants are easily threaded internally for attachment of prosthetic abutments.

A problem with metal implants is that the coronal region of a metal implant shows through gum tissue as a dark shadow, thus making the prosthetic tooth look unnatural and unhealthy.

Ceramic implants based on a zirconium dioxide system are light in color, translucent, and appear more like natural tooth roots, thus avoiding the dark shadow found with metal implants. Gingival tissues typically attach quicker and more securely to ceramic based on a zirconium dioxide system than to titanium, thus providing a better seal around the neck of the implant. This improves the overall health of the implant site, for example, by avoiding infection and thus reducing the likelihood of implant rejection.

However, there are a number of problems associated with ceramic implants. For example, dental implants are subjected to very high forces from mastication of food and, as a result, ceramic implants have a history of breakage due to their lack of tensile strength.

Further, ceramic implants are typically manufactured as one-piece constructs of the implant and the abutment and, as a result, these implants are difficult to restore if the angulations or location of the surgical placement deviate from ideal.

WO 2018/234928 discloses a dental implant comprising a non-metallic proximal implant body, a thin interface layer and a distal structural body, wherein the distal structural body is made of a titanium-based material, wherein the non-metallic proximal implant body can be made of zirconia.

### Objective of the present Invention

In view of the prior art, it was thus an object of the present invention to provide a dental implant, which shall not exhibit the aforementioned shortcomings of the known prior art dental implants.

What is needed therefore is a way to provide a dental implant comprising at least a lower part and at least an upper part (meaning at least a two-part system) made of different materials.

In particular, it was an object of the present invention to provide a dental implant consisting of at least two parts, wherein the upper part of the dental implant shall be made of a ceramic material; and wherein the upper surface of the upper part of the dental implant is adapted to be aligned with the upper surface of the jawbone of a patient.

Additionally, it was especially an object of the present invention to provide a dental implant having an upper part, which shall have a color fulfilling the esthetic requirements of a patient. This is due to the known risk that the gingiva and the jawbone as well can be degenerated by time leading to a visible upper part of the dental implant.

Further, it was an object of the present invention to provide a dental restoration system comprising such an inventive dental implant and an abutment, wherein the abutment shall have a color fulfilling the esthetic requirements of a patient, preferably the same color as the upper part of the inventive dental implant.

### Summary of the Invention

These objects and also further objects which are not stated explicitly but are immediately derivable or discernible from the connections discussed herein by way of introduction are achieved by a dental implant having all features of claim 1. Appropriate modifications to the inventive dental implant are protected in dependent claims 2 to 4. Further, claim 5 comprises a dental restoration system comprising such a dental implant while dependent claims 5 to 9 are representing preferred embodiments of said dental restoration system.

The present invention accordingly provides a dental implant comprising at least a lower part and at least an upper part; wherein said lower part of the dental implant, which is adapted to be connected to the jawbone of a patient, is made of an at least first material; wherein said upper part of the dental implant, which is adapted to be connected to the lower part of the dental implant, is made of an at least second material; and wherein the upper surface of the upper part of the dental implant is adapted to be aligned with the upper surface of the jawbone of a patient; characterized in that said at least first material is different from said at least second material; wherein the at least second material of the upper part of the implant is made of a ceramic material, and wherein said ceramic material comprises zirconium dioxide comprising at least one coloring additive.

It is thus possible in an unforeseeable manner to provide a dental implant, which does not exhibit the aforementioned shortcomings of the known prior art dental implants.

Further, a dental implant is provided, which comprises at least a lower part and at least an upper part (meaning at least a two-part system) made of different materials.

Additionally, a dental implant is provided, which is consisting of at least two parts, wherein the upper part of the dental implant is made of a ceramic material; and wherein the upper surface of the upper part of the dental implant is adapted to be aligned with the upper surface of the jawbone of a patient.

Additionally, a dental implant is provided, which has an upper part having a color fulfilling the esthetic requirements of a patient.

Further, a dental restoration system is provided, which is comprising such an inventive dental implant and an abutment, wherein the abutment has a color fulfilling the esthetic requirements of a patient, in certain embodiments even the same color as the upper part of the inventive dental implant.

### Brief Description of the Figures

Objects, features, and advantages of the present invention will also become apparent upon reading the following description in conjunction with the figures, in which:
**Fig. 1** exhibits a side view of a dental restoration system comprising a dental implant and an abutment in accordance with embodiments of the present invention.
**Fig. 2** exhibits a cross sectional side view of the dental restoration system along the axis A-A as depicted in Figure 1 comprising a dental implant and an abutment in accordance with embodiments of the present invention.

### Detailed Description of the Invention

In one embodiment, the at least first material of the lower part of the implant is made of a metallic material, preferably made of titanium or a titanium alloy.

In a preferred embodiment, the ceramic material of the upper part of the implant comprises zirconium dioxide, preferably zirconium dioxide comprising 1 to 10 mol%, in particular 2 to 7 mol%, even more particular 3 mol% or 5 mol% yttrium oxide.

Such a commonly used zirconium dioxide as raw material automatically includes normally to a certain amount at least one coloring additive.

In a further preferred embodiment, the ceramic material comprises zirconium dioxide, preferably zirconium dioxide comprising 1 to 10 mol%, in particular 2 to 7 mol%, even more particular 3 mol% or 5 mol% yttrium oxide; and comprises additionally at least one coloring additive.

As defined by appended claim 1, the upper part of the dental implant has a color according to one of the sixteen Vita classical A1-D4^{®} shades, preferably by making use of one of the sixteen ceramic materials of the Cercon^{®} ht True color technology of the applicant as the at least second material of the upper part of the dental implant.

This is advantageous because there is always the risk that the gingiva of a patient is lowered by time leading to the esthetic problem that the color of the lower part of the implant (which is commonly made of a metallic material) is detectable. From esthetic reasons, it is desired and for some patients it is even a mandatory requirement that the dental implant shall not be detectable by other people.

Even when said upper part of the dental implant would be made of a common ceramic material, it would still be apparent to other people from the environment of a patient that there is an implant existing in the mouth of the patient. Therefore, the provision of the upper part of a dental implant in a color, which shall be fitting to the color of the other dents of the patient and to the abutment (if made of a ceramic material) of the dental implant. Ideally, neither the ceramic material of the upper part of the dental implant nor the abutment of a dental restoration system shall be apparent to other people for esthetic reasons.

In another alternative embodiment, the upper part of the dental implant has a color selected from the list consisting of the sixteen Vita classical A1-D4^{®} shades plus the three additional VITA bleached shades, and the 26 tooth shades of the VITA system 3D-Master plus three shades for tooth whitening (Vita Bleached Shades); preferably by making use of one ceramic material of the Cercon^{®} ht True color technology of the applicant as the at least second material of the upper part of the dental implant.

In one embodiment, the upper part and the lower part of the dental implant are interconnected to each other by a positive connection, preferably by a conic positive connection.

As defined by appended claim 1, the upper part and the lower part of the dental implant are interconnected to each other by a shrinkage fastening connection or by providing a screw in thread in the lower part and the upper part of the implant, respectively.

Further, the object of the present invention is also solved by a dental restoration system comprising at least such an inventive dental implant and at least an abutment, wherein the abutment is adapted to be connected to the dental implant, wherein the abutment is made of at least a third material; wherein the abutment is made of a ceramic material, and wherein said ceramic material comprises zirconium dioxide comprising at least one coloring additive..

In a preferred embodiment thereof, the at least third material is different to the at least first material of the lower part of the dental implant.

In one embodiment, the ceramic material of the abutment comprises zirconium dioxide, preferably zirconium dioxide comprising 1 to 10 mol%, in particular 2 to 7 mol%, even more particular 3 mol% or 5 mol% yttrium oxide.

In one embodiment, the abutment has a color according to one of the sixteen Vita classical A1-D4^{®} shades, preferably by making use of one of the sixteen ceramic materials of the Cercon^{®} ht True color technology of the applicant as the at least third material of the abutment of the dental restoration system.

In another alternative embodiment, the abutment has a color selected from the list consisting of the sixteen Vita classical A1-D4^{®} shades plus the three additional VITA bleached shades, and the 26 tooth shades of the VITA system 3D-Master plus three shades for tooth whitening (Vita Bleached Shades); preferably by making use of one ceramic material of the Cercon^{®} ht True color technology of the applicant as the at least third material of the abutment of the dental restoration system.

In one embodiment, the abutment and the upper part of the dental implant have an identical color according to one of the sixteen Vita classical A1-D4^{®} shades, preferably by making use of one of the sixteen ceramic materials of the Cercon^{®} ht True color technology of the applicant as the at least second material of the upper part of the dental implant, and as the at least third material of the abutment of the dental restoration system.

In another alternative embodiment, the abutment and the upper part of the dental implant have an identical color selected from the list consisting of the sixteen Vita classical A1-D4^{®} shades plus the three additional VITA bleached shades, and the 26 tooth shades of the VITA system 3D-Master plus three shades for tooth whitening (Vita Bleached Shades); preferably by making use of one ceramic material of the Cercon^{®} ht True color technology of the applicant as the at least second material of the upper part of the dental implant, and as the at least third material of the abutment of the dental restoration system.

The present invention thus addresses the problem of improving a common dental implant and dental restoration systems comprising such an dental implant according to the esthetic requirements and wishes of a patient.

The following non-limiting examples are provided to illustrate an embodiment of the present invention and to facilitate understanding of the invention but are not intended to limit the scope of the invention, which is defined by the claims appended hereto.

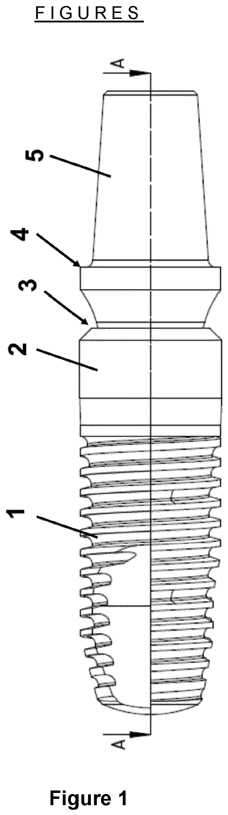

Turning now to the Figures, Figure 1 shows a side view of a dental restoration system comprising a dental implant and an abutment in accordance with an embodiment of the present invention.

Herein, a dental restoration system comprising a dental implant according to the present invention and an abutment 5 is disclosed.

Said dental implant comprises a lower part 1 and an upper part 2; wherein said lower part 1 of the dental implant, which is adapted to be connected to the jawbone of a patient, is made of a first material. The upper part 2 of the dental implant, which is connected to the lower part 1 of the dental implant, is made of a second material. The upper surface 3 of the upper part 2 of the dental implant is adapted to be aligned with the upper surface of the jawbone of a patient.

Herein, the first material is different from the second material. The first material of the lower part 1 of the implant is made of titanium.

The second material of the upper part 2 of the implant is made of a ceramic material comprises zirconium dioxide 2 to 7 mol% yttrium oxide.

The upper part 2 of the dental implant has a color according to one of the sixteen Vita classical A1-D4^{®} shades by making use of one of the sixteen ceramic materials of the Cercon^{®} ht True color technology of the applicant as the second material of the upper part 2 of the dental implant.

The abutment 5 is connected to the dental implant. Said abutment 5 has a color (not to see from the drawing itself due to its black and white character according to the formal requirements of the respective Patent Law) according to one of the sixteen Vita classical A1-D4^{®} shades by making use of one of the sixteen ceramic materials of the Cercon^{®} ht True color technology of the applicant as the third material of the abutment 5 of the dental restoration system.

The abutment 5 and the upper part 2 of the dental implant have an identical color according to one of the sixteen Vita classical A1-D4^{®} shades by making use of one of the sixteen ceramic materials of the Cercon^{®} ht True color technology of the applicant as the second material of the upper part 2 of the dental implant, and as the third material of the abutment 5 of the dental restoration system.

The height level 4 is disclosed as level in Figure 1 up to which the gingiva of a patient is reaching.

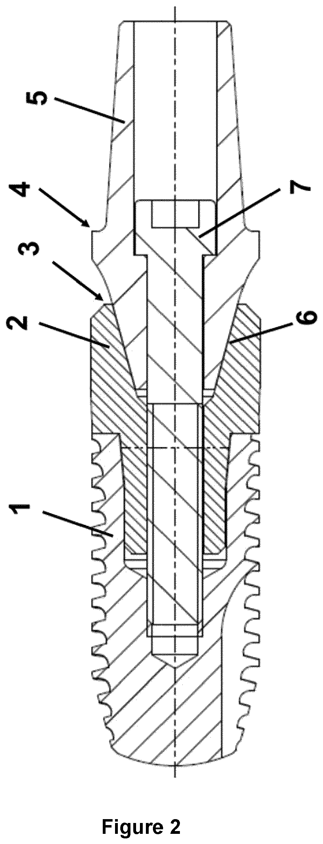

Figure 2 shows a cross sectional side view of the dental restoration system along the axis A-A as depicted in Figure 1 comprising a dental implant and an abutment in accordance with said embodiment of the present invention.

The upper part 2 and the lower part 1 of the dental implant are interconnected to each other by a positive connection 6 in form of a conic positive connection 6.

Furthermore, there is a fastening element 7 disclosed adapted to detachably connect the abutment 5 to the lower 1 part of the dental implant. In this case, the fastening element 7 is made of titanium.

It will be understood that the embodiments described herein are merely exemplary and that a person skilled in the art may make many variations and modifications without departing from the scope of the invention. All such variations and modifications, including those discussed above, can be included within the scope of the invention as defined by the appended claims.

## Claims

1. Dental implant comprising at least a lower part (1) and at least an upper part (2); wherein said lower part of the dental implant, which is adapted to be connected to the jawbone of a patient, is made of an at least first material; wherein said upper part of the dental implant, which is adapted to be connected to the lower part of the dental implant, is made of an at least second material; and wherein the upper surface (3) of the upper part (2) of the dental implant is adapted to be aligned with the upper surface of the jawbone of a patient;
said at least first material is different from said at least second material; wherein the at least second material of the upper part of the implant is made of a ceramic material, and wherein said ceramic material comprises zirconium dioxide **characterised in that** said zirconium dioxide comprises at least one coloring additive; **in that** the second material has a color according to one of the sixteen Vita classical A1-D4^{®} shades;
and **in that** the upper part and the lower part of the dental implant are interconnected to each other by a shrinkage fastening connection or by providing a screw in thread in the lower part and the upper part of the implant, respectively.

2. Dental implant according to claim 1 **characterized in that** the at least first material of the lower part of the implant is made of a metallic material, preferably made of titanium or a titanium alloy.

3. Dental implant according to claim 1 or 2 **characterized in that** the ceramic material comprises zirconium dioxide, preferably zirconium dioxide comprising 1 to 10 mol%, in particular 2 to 7 mol%, even more particular 3 mol% or 5 mol% yttrium oxide.

4. Dental implant according to one of the preceding claims **characterized in that** the upper part and the lower part of the dental implant are interconnected to each other by a positive connection, preferably by a conic positive connection.

5. Dental restoration system comprising at least a dental implant according to one of the preceding claims and at least an abutment, wherein the abutment is adapted to be connected to the dental implant, and wherein the abutment is made of at least a third material; wherein the abutment is made of a ceramic material, and wherein said ceramic material comprises zirconium dioxide comprising at least one coloring additive.

6. Dental restoration system according to claim 5 **characterized in that** the at least third material is different to the at least first material of the lower part of the dental implant.

7. Dental restoration system according to claim 5 or 6 **characterized in that** the ceramic material comprises zirconium dioxide, preferably zirconium dioxide comprising 1 to 10 mol%, in particular 2 to 7 mol%, even more particular 3 mol% or 5 mol% yttrium oxide.

8. Dental restoration system according to one of the preceding claims 5 to 7 **characterized in that** the abutment has a color according to one of the sixteen Vita classical A1-D4^{®} shades.

9. Dental restoration system according to one of the preceding 5 to 8 **characterized in that** the abutment and the upper part of the dental implant have an identical color according to one of the sixteen Vita classical A1-D4^{®} shades.

## Patentansprüche

1. Zahnimplantat, umfassend mindestens einen unteren Teil (1) und mindestens einen oberen Teil (2);
wobei der untere Teil des Zahnimplantats, der dazu ausgelegt ist, mit dem Kieferknochen eines Patienten verbunden zu sein, aus einem mindestens ersten Material hergestellt ist; wobei der obere Teil des Zahnimplantats, der dazu ausgelegt ist, mit dem unteren Teil des Zahnimplantats verbunden zu sein, aus einem mindestens zweiten Material hergestellt ist; und wobei die obere Fläche (3) des oberen Teils (2) des Zahnimplantats dazu ausgelegt ist, mit der oberen Fläche des Kieferknochens eines Patienten ausgerichtet zu sein;
sich das mindestens erste Material von dem mindestens zweiten Material unterscheidet;
wobei das mindestens zweite Material des oberen Teils des Implantats aus einem keramischen Material hergestellt ist und wobei das keramische Material Zirkoniumdioxid umfasst, **dadurch gekennzeichnet, dass** das Zirkoniumdioxid mindestens ein Färbeadditiv umfasst;
dadurch, dass das zweite Material eine Farbe gemäß einem der sechzehn klassischen Vita A1-D4^{®}-Farbtöne aufweist; und
dadurch, dass der obere Teil und der untere Teil des Zahnimplantats durch eine Schrumpfbefestigungsverbindung oder durch Bereitstellen eines Einschraubgewindes in dem unteren Teil und bzw. dem oberen Teil des Implantats miteinander verbunden sind.

2. Zahnimplantat nach Anspruch 1, **dadurch gekennzeichnet, dass** das mindestens erste Material des unteren Teils des Implantats aus einem metallischen Material hergestellt ist, bevorzugt aus Titan oder einer Titanlegierung hergestellt ist.

3. Zahnimplantat nach Anspruch 1 oder 2, **dadurch gekennzeichnet, dass** das keramische Material Zirkoniumdioxid, bevorzugt Zirkoniumdioxid umfassend 1 bis 10 Mol-%, insbesondere 2 bis 7 Mol-%, ganz besonders 3 Mol-% oder 5 Mol-% Yttriumoxid, umfasst.

4. Zahnimplantat nach einem der vorhergehenden Ansprüche, **dadurch gekennzeichnet, dass** der obere Teil und der untere Teil des Zahnimplantats durch eine formschlüssige Verbindung, bevorzugt durch eine konische formschlüssige Verbindung, miteinander verbunden sind.

5. Zahnersatzsystem, umfassend mindestens ein Zahnimplantat nach einem der vorhergehenden Ansprüche und mindestens ein Abutment, wobei das Abutment dazu ausgelegt ist, mit dem Zahnimplantat verbunden zu sein, und wobei das Abutment aus mindestens einem dritten Material hergestellt ist; wobei das Abutment aus einem keramischen Material hergestellt ist und wobei das keramische Material Zirkoniumdioxid umfasst, das mindestens ein Färbeadditiv umfasst.

6. Zahnersatzsystem nach Anspruch 5, **dadurch gekennzeichnet, dass** sich das mindestens dritte Material von dem mindestens ersten Material des unteren Teils des Zahnimplantats unterscheidet.

7. Zahnersatzsystem nach Anspruch 5 oder 6, **dadurch gekennzeichnet, dass** das keramische Material Zirkoniumdioxid, bevorzugt Zirkoniumdioxid umfassend 1 bis 10 Mol-%, insbesondere 2 bis 7 Mol-%, ganz besonders 3 Mol-% oder 5 Mol-% Yttriumoxid, umfasst.

8. Zahnersatzsystem nach einem der vorhergehenden Ansprüche 5 bis 7, **dadurch gekennzeichnet, dass** das Abutment eine Farbe gemäß einem der sechzehn klassischen Vita A1-D4^{®}-Farbtöne aufweist.

9. Zahnersatzsystem nach einem der vorhergehenden Ansprüche 5 bis 8, **dadurch gekennzeichnet, dass** das Abutment und der obere Teil des Zahnimplantats eine identische Farbe gemäß einem der sechzehn klassischen Vita A1-D4^{®}-Farbtöne aufweisen.

## Revendications

1. Implant dentaire comprenant au moins une partie inférieure (1) et au moins une partie supérieure (2) ;
dans lequel ladite partie inférieure de l'implant dentaire, qui est adaptée pour être reliée à l'os maxillaire d'un patient, est constituée d'au moins un premier matériau ; dans lequel ladite partie supérieure de l'implant dentaire, qui est adaptée pour être reliée à la partie inférieure de l'implant dentaire, est constituée d'au moins un deuxième matériau ; et dans lequel la surface supérieure (3) de la partie supérieure (2) de l'implant dentaire est adaptée pour être alignée à la surface supérieure de l'os maxillaire d'un patient ;
ledit au moins un premier matériau est différent dudit au moins un deuxième matériau ;
dans lequel l'au moins un deuxième matériau de la partie supérieure de l'implant est constitué d'un matériau céramique, et dans lequel ledit matériau céramique comprend du dioxyde de zirconium **caractérisé en ce que** ledit dioxyde de zirconium comprend au moins un additif colorant ;
**en ce que** le deuxième matériau comporte une couleur conforme à l'une des seize teintes Vita Classical A1-D4^{®} ; et
**en ce que** la partie supérieure et la partie inférieure de l'implant dentaire sont interconnectées l'une à l'autre par une connexion de fixation par rétrécissement ou en prévoyant une vis en filet dans la partie inférieure et la partie supérieure de l'implant, respectivement.

2. Implant dentaire selon la revendication 1 **caractérisé en ce que** l'au moins un premier matériau de la partie inférieure de l'implant est constitué d'un matériau métallique, de préférence constitué de titane ou d'un alliage de titane.

3. Implant dentaire selon la revendication 1 ou 2, **caractérisé en ce que** le matériau céramique comprend du dioxyde de zirconium, de préférence du dioxyde de zirconium comprenant 1 à 10 % en moles, en particulier 2 à 7 % en moles, encore plus particulièrement 3 % en moles ou 5 % en moles d'oxyde d'yttrium.

4. Implant dentaire selon l'une quelconque des revendications précédentes, **caractérisé en ce que** la partie supérieure et la partie inférieure de l'implant dentaire sont interconnectées l'une à l'autre par une connexion positive, de préférence par une connexion positive conique.

5. Système de restauration dentaire comprenant au moins un implant dentaire selon l'une des revendications précédentes et au moins un pilier, dans lequel le pilier est adapté pour être connecté à l'implant dentaire, et dans lequel le pilier est constitué d'au moins un troisième matériau ; dans lequel le pilier est constitué d'un matériau céramique, et dans lequel ledit matériau céramique comprend du dioxyde de zirconium comprenant au moins un additif colorant.

6. Système de restauration dentaire selon la revendication 5, **caractérisé en ce que** l'au moins un troisième matériau est différent de l'au moins un premier matériau de la partie inférieure de l'implant dentaire.

7. Système de restauration dentaire selon la revendication 5 ou 6, **caractérisé en ce que** le matériau céramique comprend du dioxyde de zirconium, de préférence du dioxyde de zirconium comprenant 1 à 10 % en moles, en particulier 2 à 7 % en moles, encore plus particulièrement 3 % en moles ou 5 % en moles d'oxyde d'yttrium.

8. Système de restauration dentaire selon l'une des revendications précédentes 5 à 7, **caractérisé en ce que** le pilier a une couleur conforme à l'une des seize teintes Vita Classical A1-D4^{®}.

9. Système de restauration dentaire selon l'une des revendications précédentes 5 à 8, **caractérisé en ce que** le pilier et la partie supérieure de l'implant dentaire ont une couleur identique selon l'une des seize teintes Vita Classical A1-D4^{®}.
